# EUROPÄISCHE PATENTANMELDUNG

(11) **EP 1 122 039 A1**
(43) Veröffentlichungstag der Anmeldung: **08.08.2001**
(21) Anmeldenummer: 01101230.9
(22) Anmeldetag: 19.01.2001
(51) Int. Cl.: B25J 19/00, B25J 21/00, B23Q 11/08

(54) **Mehrachsiger Roboter mit einer dichten Umhüllung**

(30) Priorität: 02.02.2000 DE 10004519
(71) Anmelder: KUKA Roboter GmbH, 86165 Augsburg (DE)
(72) Erfinder: Wenninger, Michael, Halesowen, West Midlands B62 8AN (GB); Khodabandehloo, Koorosh, Culmstock, Devon EX15 3LA (GB)
(74) Vertreter: Lempert, Jost, Dipl.-Phys. Dr. rer.nat.

(57) **Zusammenfassung**

Es wird ein mehrachsiger Roboter (1) mit einem Gestell (2) und einem Aufbau mit wenigstens einem Roboterarm (4) mit einer Roboterhand (6), insbesondere für den Einsatz im Lebensmittelbereich, vorgeschlagen. Der Roboter (1) weist eine ihn im wesentlichen gas- und flüssigkeitsdicht umgebende Umhüllung (10) auf, die zumindest an einem der Roboterhand (6) zugewandten Abschnitt flexibel ausgebildet ist und ein Werkzeug (8) zumindest teilweise freiläßt, wobei sie dem Übergangsbereich von Roboterhand (6) zu Werkzeug (8) dichtend anliegt. In bevorzugter Ausführung ist vorgesehen, daß die Umhüllung (10) nach Art einer zumindest das Gestell (2) des Roboters aufnehmenden Kabine (20) mit wenigstens einem Durchlaß (18) für den Roboterarm (4) ausgebildet ist, wobei der Durchlaß (18) um seinen Umfang mit einer der Roboterhand (6) dicht anliegenden, flexiblen Membran (11) verbunden ist.

## Beschreibung

Die Erfindung betrifft einen mehrachsigen Roboter mit einem Gestell und einem Aufbau mit wenigstens einem Roboterarm mit einer Roboterhand, insbesondere für den Einsatz im Lebensmittelbereich.

Roboter zum Einsatz in einer Umgebung mit erhöhten Hygieneanforderungen, z. B. im Lebensmittelbereich, im medizinischen oder pharmazeutischen Bereich oder dergleichen, sind speziell ausgebildete Roboter, die ihrerseits den erhöhten Hygieneanforderungen, die an die Umgebung gestellt werden, genügen müssen. So sind bekannte, für den genannten Einsatzzweck geeignete Roboter mit einem Gehäuse aus inerten und leicht zu reinigenden bzw. zu desinfizierenden Werkstoffen, z.B. Edelstahl, oder mit einer speziellen Beschichtung oder Lackierung ausgestattet. Sie erfordern entweder den Einsatz von kostenintensiven ökologischen Schmiermitteln oder - im Falle der Verwendung von herkömmlichen Schmiermitteln, wie Mineralölen - zusätzliche Dichtungseinrichtungen, um einen Austritt der Schmiermittel aus dem Roboter und somit eine Kontamination der Umgebung zuverlässig zu vermeiden. Da es sich bei derart ausgestalteten Robotern um Spezialausführungen handelt, die nur in geringer Stückzahl hergestellt werden, sind sie einerseits nur in wenigen Ausführungsvarianten, z.B. hinsichtlich Kinematik, Traglast, Arbeitsraum etc., erhältlich, andererseits sind sie - nicht zuletzt aufgrund der Verwendung spezieller Werkstoffe - sehr teuer. Letzteres gilt insbesondere auch für ihre Ersatz- und Verschleißteile sowie Betriebsstoffe, wie beispielsweise Schmiermittel, die auf Lager gehalten werden müssen.

Der Erfindung liegt daher die Aufgabe zugrunde, unter Vermeidung der vorgenannten Nachteile einen kostengünstigen Roboter zu schaffen, der in einer Umgebung mit erhöhten Hygieneanforderungen universell einsetzbar ist.

Erfindungsgemäß wird diese Aufgabe mit einem Roboter der eingangs genannten Art gelöst, der durch eine ihn im wesentlichen gas- und flüssigkeitsdicht umgebende Umhüllung, die zumindest an einem der Roboterhand zugewandten Abschnitt flexibel ausgebildet ist und ein Werkzeug zumindest teilweise freiläßt, wobei sie dem Übergangsbereich von Roboterhand dichtend anliegt, gekennzeichnet ist.

Die erfindungsgemäße, den Roboter gas- und flüssigkeitsdicht umgebende Umhüllung verhindert einerseits Kontaminationen der Umgebung durch den Roboter, z.B. durch aus dem Roboter austretende Schmiermittel, Abrieb von Dichtungen oder dergleichen, andererseits eine Beeinträchtigung des Roboters durch Wasch-, Desinfektionsmittel oder dergleichen. Sie umgibt den Roboter mit Ausnahme seines Werkzeugs vollständig, wobei sie vorzugsweise mit einem die Roboterhand umgebenden Bereich dieser allseitig dichtend anliegt und zumindest im Bereich er Roboterhand oder des gesamten Roboterarms flexibel ausgebildet ist, um uneingeschränkte Bewegungen des Roboters zuzulassen. Der Roboter erfordert außer der Umhüllung keinerlei weitere kostenintensiven Maßnahmen, um ihm den Einsatz in einer Umgebung mit erhöhten Hygieneanforderungen zu gestatten. Dies ermöglicht die Verwendung beliebiger, herkömmlicher Roboter, die lediglich mit einer entsprechenden erfindungsgemäßen Umhüllung versehen werden müssen.

In bevorzugter Ausführung ist eine lösbare Verbindung zwischen dem die Roboterhand umgebenden Bereich der Umhüllung und der Rest-Umhüllung vorgesehen, die beispielsweise als im wesentlichen gas- und flüssigkeitsdichter Reißverschluß oder Klettverschluß ausgebildet sein oder eine Lippendichtung aufweisen kann. Weiterhin können Spannmittel, wie Spannbänder, Klammern oder dergleichen, vorgesehen sein, um die Rest-Umhüllung im Bereich der lösbaren Umhüllung am Roboter festzulegen bzw. zu zurren. Auf diese Weise ist ein einfacher Austausch des Roboters bzw. der Umhüllung möglich, was insbesondere bei Wartungen oder Reparaturen des Roboters von Vorteil ist. Gleichzeitig kann eine einzige Umhüllung für verschiedene Robotertypen verwendet werden.

Die Umhüllung ist vorzugsweise zumindest teilweise transparent, um den Betrieb des Roboters visuell verfolgen zu können.

Eine bevorzugte Ausführung sieht vor, daß die Umhüllung nach Art einer zumindest das Gestell des Roboters aufnehmenden Kabine mit wenigstens einem Durchlaß für den Roboterarm und einer Membran ausgebildet ist, wobei der Durchlaß um seinen Umfang mit der flexiblen Membran im wesentlichen gas- und flüssigkeitsdicht verbunden ist. Gemäß dieser Ausführung ist zumindest die Roboterbasis in der Kabine untergebracht, während der Roboterarm mit der Roboterhand den Durchlaß durchgreift und die den Umfang der Roboterhand mit dem Umfang des Durchlasses verbindende, flexible Membran den Innenraum der Kabine gegenüber der Umgebung abdichtet und dem Roboterarm bzw. der Roboterhand die erforderliche Bewegungsfreiheit gewährleistet.

Die Kabine weist zweckmäßig eine glatte, auf einfache Weise zu reinigende und zu desinfizierende Außenfläche auf und kann beispielsweise mit Schrägen und/oder Rinnen versehen sein, welche den Ablauf von Reinigungs- oder Desinfektionsmitteln erleichtern.

In bevorzugter Ausführung ist vorgesehen, daß eine lösbare Verbindung zwischen dem Durchlaß und der Membran vorgesehen ist, wobei die lösbare Verbindung zwischen dem Durchlaß und der Membran z.B. entsprechend der lösbaren Verbindung zwischen dem die Roboterhand umgebenden Bereich der Umhüllung und der Rest-Umhüllung als Reiß- oder Klettverschluß ausgebildet sein, eine Lippendichtung oder auch Spannmittel, wie Spannbänder, Klammern oder dergleichen, aufweisen kann.

Bevorzugt ist das Gestell des Roboters auf einer den Boden oder die Decke der Kabine bildenden Grundplatte und der Durchlaß an wenigstens einer Seitenwand der Kabine angeordnet.

Die Kabine ist vorzugsweise begehbar, so daß der Roboter auf einfache Weise zugänglich ist. Im Falle einer begehbaren Kabine nimmt diese bevorzugt eine Steuereinrichtung für den Roboter auf. Weiterhin bevorzugt weist die Kabine wenigstens ein Fenster auf oder sind die Seitenwände der Kabine zumindest teilweise transparent ausgebildet und bestehen beispielsweise aus Glas, Plexiglas oder dergleichen.

Die der Roboterhand dicht anliegende, flexible Membran besteht entweder aus einem dehnbaren Material, wie einer elastomeren Kunststoffolie, und ist zwischen dem Durchlaß der Kabine und der Roboterhand gespannt, oder die Membran besteht aus einem nicht oder nur gering dehnbaren Material, wie einer thermoplastischen Kunststoffolie oder beschichteten Textilien, und ist zwischen dem Durchlaß und der Roboterhand gerafft, gefaltet oder dergleichen.

Im übrigen betrifft die Erfindung auch eine Umhüllung für einen mehrachsigen Roboter mit wenigstens einem der vorgenannten Merkmale.

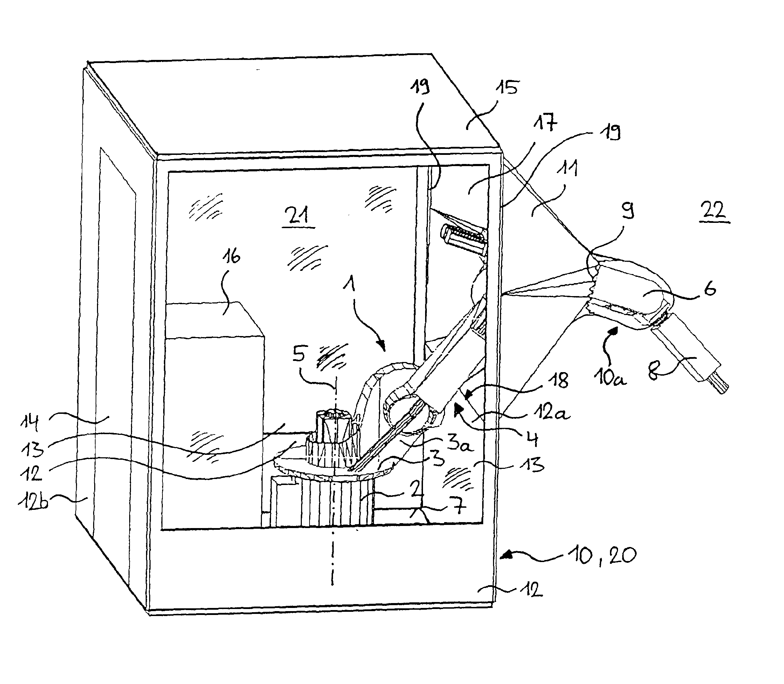

Nachfolgend ist die Erfindung anhand einer bevorzugten Ausführungsform unter Bezugnahme auf die Zeichnung näher erläutert. Dabei zeigt die einzige Figur
eine perspektivische Ansicht eines mehrachsigen Roboters mit einer nach Art einer Kabine ausgebildeten Umhüllung.

Der in der Zeichnung dargestellte mehrachsige Roboter 1 umfaßt ein auf einer Grundplatte 7 angeordnetes Gestell 2 und ein auf dem Gestell 2 angeordnetes, um eine Grundachse 5 schwenkbares Karussell 3. Auf dem Karussell 3 ist über eine Schwinge 3a ein um mehrere Achsen verschwenkbarer Roboterarm 4 mit einer Roboterhand 6, an der ein Werkzeug 8 befestigt ist, angeordnet. Bei dem Roboter 1 handelt es sich um einen beliebigen herkömmlichen Roboter, welcher an sich zum Einsatz in einer Umgebung 22 mit erhöhten Hygieneanforderungen nicht geeignet ist. Der Aufbau des Roboters 1 kann auch beliebig andersartig ausgestaltet sein; ebenso ist die Zahl und Ausbildung der Roboterachsen beliebig.

Um den Roboter 1 in der Umgebung 22 mit erhöhten Hygieneanforderungen universell einsetzen zu können, ist dieser mit einer Umhüllung 10 versehen, die eine Kabine 20 aufweist, die das Gestell 2, das auf dem Gestell 2 angeordnete Karussell 3 sowie den Sockel des Roboterarms 4 aufnimmt.

Die Kabine 20 ist in der gezeigten Ausführung im wesentlichen quaderförmig ausgebildet, wobei die Grundplatte 7 des Roboters zugleich den Boden der Kabine 20 bildet. Die Kabine 20 weist zwei mit Fenstern 13 versehene Seitenwände 12, eine mit einer Tür 14 zum Begehen des Innenraums 21 der Kabine 20 versehene Seitenwand 12b und eine der Seitenwand 12b gegenüberliegend angeordnete Seitenwand 12a auf. In der Seitenwand 12a ist ein Durchlaß 18 für den Roboterarm 4 ausgebildet, um dessen Umfang eine flexible Membran 11 angeordnet ist, die den Innenraum 21 der Kabine 20 gas- und flüssigkeitsdicht von der Umgebung 22 isoliert. Die Kabine 20 besteht insbesondere aus einem inerten, glatten und leicht zu reinigenden Material, z.B. Edelstahl, Kunststoff oder dergleichen, oder ist mit einem solchen beschichtet. Das Dach 15 der Kabine ist beispielsweise geneigt angeordnet, um einen Ablauf von Reinigungs- oder Desinfektionsmitteln zu ermöglichen. Die Kabine 20 nimmt ferner eine Steuereinrichtung 16 nach Art eines Schaltschranks für den Roboter 1 auf.

In der gezeigten Ausführung besteht die Membran 11 aus einem dehnbaren Material, z. B. einer elastomeren Kunststofffolie, und ist zwischen dem Durchlaß 18 in der Seitenwand 12a der Kabine 20 und der Roboterhand 6 gespannt. Die Roboterhand 6 ist von einem von der Rest-Umhüllung bzw. der Membran 11 abtrennbaren Bereich 10a dicht umgeben. Zur Gewährleistung der Trennbarkeit kann zwischen diesem Bereich 10a und der Membran 11 eine lösbare Verbindung 9, z. B. ein gas- und flüssigkeitsdichter Reißverschluß, vorgesehen sein, wodurch ein einfacher Austausch des Roboters beziehungsweise Teile desselben ermöglicht wird. Um den fertig montierten Roboter 1 aus der Kabine 20 zu entfernen, können die Fenster 13 z. B. aufklappbar bzw. als Türen ausgebildet sein.

Die erfindungsgemäße Umhüllung 20 verhindert jegliche Kontaminationen der Umgebung 22 durch den Roboter 6 wie auch sämtliche Beeinträchtigungen des Roboters 6 durch in der Umgebung 22 eingesetzte Substanzen, wie Wasch- oder Desinfektionsmittel. Sie gestattet insbesondere den Einsatz herkömmlicher Roboter 1 in einer Umgebung 22 mit erhöhten Hygieneanforderungen und macht somit den Einsatz von aufwendigen und teuren Spezialrobotern entbehrlich.

### Bezugszeichenliste

- 1: Roboter
- 2: Gestell
- 3: Karussell
- 4: Schwinge
- 5: Roboterarm
- 6: Roboterhand
- 7: Grundplatte
- 8: Werkzeug
- 9: Verbindung zwischen Membran und Roboterhand
- 10: Umhüllung
- 10a: die Roboterhand umgebender Bereich der Umhüllung
- 11: flexible Membran
- 12, 12a, 12b: Seitenwand
- 13: Fenster
- 14: Tür
- 15: Dach
- 16: Steuereinrichtung
- 17: Fenster
- 18: Durchlaß
- 19: Verbindung zwischen Membran und Durchlaß
- 20: Kabine
- 21: Innenraum
- 22: Umgebung

## Patentansprüche

1. Mehrachsiger Roboter (1) mit einem Gestell (2), einem Aufbau mit wenigstens einem Roboterarm (4) mit einer Roboterhand (6) und einer den Roboter (1) im wesentlichen gas- und flüssigkeitsdicht umgebenden Umhüllung (10), insbesondere für den Einsatz im Lebensmittelbereich, dadurch gekennzeichnet, daß die Umhüllung (10) eine zumindest das Gestell (2) des Roboters (1) aufnehmenden Kabine (20) mit wenigstens einem Durchlaß (18) für den Roboterarm (4) und eine flexible Membran (11) aufweist, wobei der Durchlaß (18) um seinen Umfang mit der Membran (11) im wesentlichen gas- und flüssigkeitsdicht verbunden ist und ein Werkzeug (8) zumindest teilweise freiläßt, während die Membran (11) dem Übergangsbereich von Roboterhand (6) zu werkzeug (8) dichtend anliegt.

2. Roboter nach Anspruch 1, dadurch gekennzeichnet, daß ein die Roboterhand (6) umgebender Bereich (10a) der Umhüllung (10) an der Roboterhand (6) dichtend anliegt.

3. Roboter nach Anspruch 2, dadurch gekennzeichnet, daß eine lösbare Verbindung (9) zwischen dem Bereich (10a) und der Membran (11) vorgesehen ist.

4. Roboter nach Anspruch 3, dadurch gekennzeichnet, daß die Verbindung (9) zwischen dem Bereich (10a) und der Membran (11) als im wesentlichen gas- und flüssigkeitsdichter Reiß- oder Klettverschluß ausgebildet ist.

5. Roboter nach Anspruch 3, dadurch gekennzeichnet, daß die Verbindung (9) zwischen dem Bereich (10a) und der Membran (11) eine Lippendichtung aufweist.

6. Roboter nach Anspruch 3, dadurch gekennzeichnet, daß die Verbindung (9) zwischen dem Bereich (10a) und der Membran (11) ein Spannmittel, wie ein Spannband, eine Klammer oder dergleichen, aufweist.

7. Roboter nach einem der Ansprüche 1 bis 6, dadurch gekennzeichnet, daß die Umhüllung (10) zumindest teilweise transparent ist.

8. Roboter nach einem der Ansprüche 1 bis 7, dadurch gekennzeichnet, daß eine lösbare Verbindung (19) zwischen dem Durchlaß (18) und der Membran (11) vorgesehen ist.

9. Roboter nach Anspruch 8, dadurch gekennzeichnet, daß die Verbindung (19) zwischen dem Durchlaß (18) und der Membran (11) als im wesentlichen gas- und flüssigkeitsdichter Reißverschluß oder Klettverschluß ausgebildet ist.

10. Roboter nach Anspruch 8, dadurch gekennzeichnet, daß die Verbindung (19) zwischen dem Durchlaß (18) und der Membran (11) eine Lippendichtung aufweist.

11. Roboter nach Anspruch 8, dadurch gekennzeichent, daß die Verbindung (19) zwischen dem Durchlaß (18) und der Membran (11) ein Spannmittel, wie ein Spannband, eine Klammer oder dergleichen, aufweist.

12. Roboter nach einem der Ansprüche 1 bis 11, dadurch gekennzeichnet, daß das Gestell (2) des Roboters (1) auf einer den Boden oder die Decke der Kabine (20) bildenden Grundplatte (7) angeordnet ist.

13. Roboter nach einem der Ansprüche 1 bis 12, dadurch gekennzeichnet, daß der Durchlaß (18) an wenigstens einer Seitenwand (12a) der Kabine (20) angeordnet ist.

14. Roboter nach einem der Ansprüche 1 bis 13, dadurch gekennzeichnet, daß die Kabine (20) begehbar ist.

15. Roboter nach Anspruch 14, dadurch gekennzeichnet, daß die Kabine (20) eine Steuereinrichtung (16) für den Roboter (1) aufnimmt.

16. Roboter nach einem der Ansprüche 1 bis 15, dadurch gekennzeichnet, daß die Kabine (20) wenigstens ein Fenster (13) aufweist.

17. Roboter nach einem der Ansprüche 1 bis 16, dadurch gekennzeichnet, daß die Membran (11) aus deinem dehnbaren Material besteht.

18. Roboter nach Anspruch 17, dadurch gekennzeichnet, daß die Membran (11) zwischen dem Durchlaß (18) und der Roboterhand (6) gespannt ist.

19. Roboter nach Anspruch 17 oder 18, dadurch gekennzeichnet, daß die Membran (11) aus einer elastomeren Kunststoffolie besteht.

20. Roboter nach einem der Ansprüche 1 bis 16, dadurch gekennzeichnet, daß die Membran (11) aus einem nicht oder nur gering dehnbaren Material besteht und zwischen dem Durchlaß (18) und der Roboterhand (6) gerafft ist.

21. Roboter nach Anspruch 20, dadurch gekennzeichnet, daß die Membran (11) aus einer thermoplastischen Kunststoffolie besteht.

22. Roboter nach Anspruch 20, dadurch gekennzeichnet, daß die Membran (11) aus beschichteten Textilien besteht.

23. Umhüllung für einen mehrachsigen Roboter (1), gekennzeichnet durch die Merkmale wenigstens eines der Ansprüche 1 bis 22.
